# EUROPÄISCHE PATENTSCHRIFT

(11) **EP 3 464 945 B1**
(45) Veröffentlichungstag und Bekanntmachung des Hinweises auf die Patenterteilung: **18.05.2022**
(21) Anmeldenummer: 17728059.1
(22) Anmeldetag: 23.05.2017
(51) Int. Cl.: F16H 25/20

(54) **LINEARANTRIEB MIT EINER IN EINEM LAGERSCHILD DREHBAR GELAGERTEN SPINDELMUTTER UND SPINDEL**
LINEAR DRIVE HAVING A SPINDLE AND SPINDLE NUT ROTATABLY MOUNTED IN A BEARING PLATE
ENTRAÎNEMENT LINÉAIRE COMPORTANT UN ÉCROU DE BROCHE ET UNE BROCHE MONTÉS À ROTATION DANS UN FLASQUE

(30) Priorität: 06.06.2016 DE 102016006735
(43) Veröffentlichungstag der Anmeldung: 10.04.2019
(73) Patentinhaber: SEW-EURODRIVE GmbH & Co. KG, 76646 Bruchsal (DE)
(72) Erfinder: DITTES, Gerhard, 75053 Gondelsheim (DE)
(86) Internationale Anmeldenummer: PCT/EP2017/025143
(87) Internationale Veröffentlichungsnummer: WO 2017/211461

(56) Entgegenhaltungen:
- DE-A1- 4 105 090
- DE-A1-102013 214 733
- DE-T2- 60 313 938
- DE-T2- 69 912 236
- FR-A1- 2 856 452
- US-A1- 2005 098 376

## Beschreibung

Die Erfindung betrifft einen Linearantrieb mit einer in einem Lagerschild drehbar gelagerten Spindelmutter und Spindel.

Es ist allgemein bekannt, dass bei relativer Drehbewegung einer Spindel zu einer Spindelmutter eine relative Linearverschiebung zwischen Spindel und Spindelmutter stattfindet, wenn die Spindel oder die Spindelmutter an der Drehbewegung gehindert wird und die Spindel in die Spindelmutter eingeschraubt ist.

Aus der DE 699 12 236 T2 ist als nächstliegender Stand der Technik ein Verbindungselement mit Gewindespindelantrieb bekannt.

Aus der DE 41 05 090 A1 ist eine Führungseinrichtung für zusammengesetzte Bewegungen bekannt.

Aus der FR 2 856 452 A1 ist ein Linearantrieb bekannt.

Aus der US 2005 / 098376 A1 ist ein Verfahren zum Steuern eines Fahrzeugs bekannt.

Aus der DE 603 13 938 T2 ist ein Stabilisierungsflossenaktuator mit fehlfunktionsausgelöstem Feststellmechanismus bekannt.

Aus der DE 10 2013 214 733 A1 ist ein Linearantrieb bekannt.

Der Erfindung liegt daher die Aufgabe zugrunde, eine hohe Standzeit bei einem Linearantrieb zu erreichen.

Erfindungsgemäß wird die Aufgabe bei dem Linearantrieb nach den in Anspruch 1 angegebenen Merkmalen gelöst. Weitere vorteilhafte Ausgestaltungen sind in den abhängigen Ansprüchen angegeben.

Wichtige Merkmale bei dem Linearantrieb nach Anspruch 1 sind, dass er mit Spindelmutter und Spindel sowie mit einem Lagerschild, in welchem ein Lager aufgenommen ist zur drehbaren Lagerung der Spindelmutter, wobei die Spindel in die Spindelmutter eingeschraubt ist, vorgesehen ist, wobei mittels des im Lagerschild aufgenommenen Lagers die Spindelmutter drehbar gelagert ist, wobei die Spindelmutter drehfest mit einer ersten Riemenscheibe eines Riemengetriebes verbunden ist, welche kraftschlüssig mit einem Riemen des Riemengetriebes im Eingriff ist oder verbunden ist, wobei der Riemen mit einer von der ersten Riemenscheibe beabstandeten Riemenscheibe im Eingriff ist oder verbunden ist, wobei die zweite Riemenscheibe drehfest mit der Rotorwelle eines Elektromotors verbunden ist.

Von Vorteil ist dabei, dass der antreibende Motor in Querrichtung zum Spindeltrieb beziehungsweise zur Spindelachse angeordnet ist und dabei beabstandet ist zur Spindel. Auf diese Weise ist eine in Achsrichtung der Spindel gesehen, sehr kompakte Ausführung ermöglicht. Mittels der kraftschlüssigen Verbindung zwischen Riemen und Riemenscheiben werden Überlastungen nicht durchgeleitet, so dass mittels des Linearantriebs insgesamt eine höhere Standzeit erreichbar ist.

Die Erfindung wird nun anhand von Abbildungen näher erläutert:
In der Figur 1 ist eine Schnittansicht eines Linearantriebs gezeigt, wobei ein Elektromotor 7 über einen Riementrieb einen Spindeltrieb antreibt, wobei der Elektromotor 7 über den Riementrieb beabstandet vom Spindeltrieb angeordnet ist und die Spindel 17 des Spindeltriebs axial beidseitig aus einem Lagerschild 1 des Spindeltriebs hervorragt und axial vorwärts oder rückwärts bewegbar ist.
In der Figur 2 ist ein am Lagerschild 1 angeordnetes Kardangelenk des Spindeltriebs angeschnitten dargestellt.

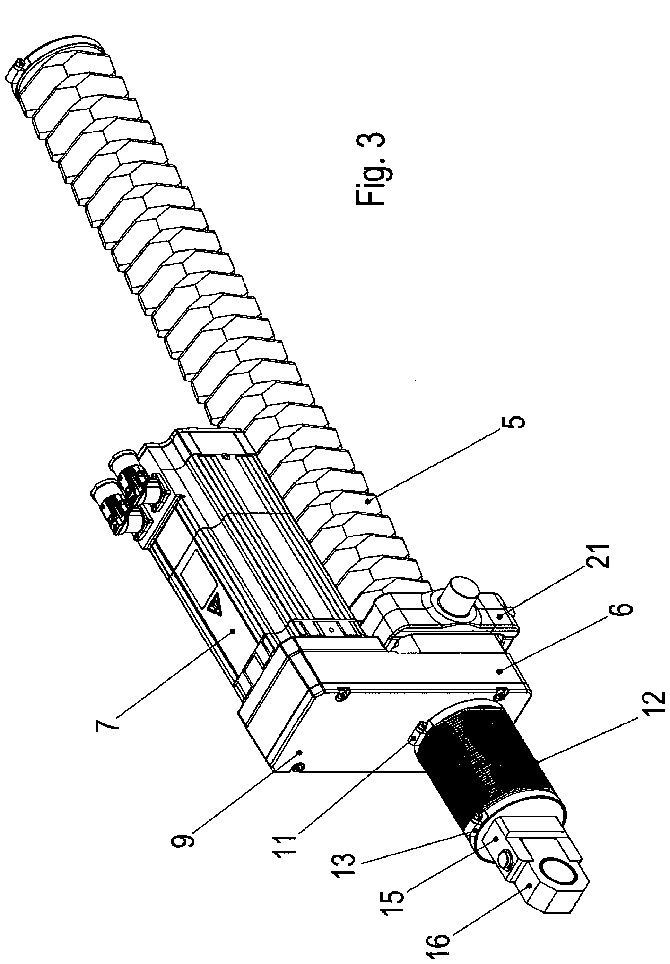

In der Figur 3 ist der Linearantrieb in Schrägansicht dargestellt.
In der Figur 4 ist ein Ausschnitt des Linearantriebs in Schrägansicht angeschnitten dargestellt.
In der Figur 5 ist das Lagerschild 1 angeschnitten in Schrägansicht dargestellt, so dass ein im Lagerschild angeordneter Luftkanal ersichtlich ist.
In der Figur 6 ist ein Ausschnitt des Linearantriebs in Schrägansicht aus einer anderen Blickrichtung als in Figur 4 dargestellt.
In der Figur 7 ist ein Ausschnitt des Linearantriebs im Querschnitt gezeigt, so dass die axiale Luftdurchführung erkennbar ist.
In der Figur 8 ist ein Teil des Kardangelenks in explodierter Ansicht dargestellt.
In der Figur 9 ist ein anderer **nicht** erfindungsgemäßer Linearantrieb in Schrägansicht dargestellt, bei welchem der Elektromotor 7 die Spindel des Spindeltriebs direkt antreibt, also koaxial zum Spindeltrieb angeordnet ist.
In der Figur **10** ist der zu Figur 9 gehörige Spindeltrieb angeschnitten dargestellt.
In der Figur 11 ist ein weiterer erfindungsgemäßer Linearantrieb gezeigt, wobei der Spindeltrieb der Figur 9 über einen Riementrieb von einem über den Riementrieb beabstandeten Elektromotor 7 angetrieben wird.

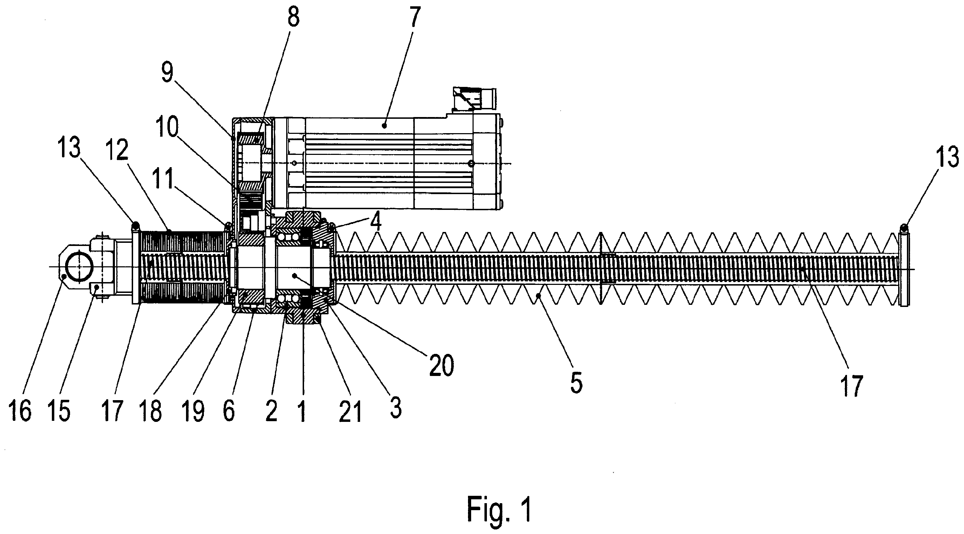

Wie in Figur 1 gezeigt, treibt ein Elektromotor 7 über einen Riementrieb einen Spindeltrieb an. Dabei ist ein Verzahnungsteil 8 drehfest verbunden mit der Rotorwelle des Elektromotors 7. Mittels des Verzahnungsteils 8 wird ein Riemen 10 angetrieben, dessen Verzahnung mit der Verzahnung des Verzahnungsteils 8 im Eingriff steht.

Das Gehäuse des Elektromotors 7 ist mit einem Gehäuseteil 6 des Riementriebs schraubverbunden.

Beabstandet von dem Gehäuseteil 6 des Riementriebs ist ein Lagerschild 1 verbunden mit dem Gehäuseteil 6 des Riementriebs.

Im Lagerschild 1 ist ein zweireihiges Wälzlager 2 aufgenommen, das zur drehbaren Lagerung einer Spindelmutter 20 vorgesehen ist. Mit der Spindelmutter 20 ist ein Verzahnungsteil 19 drehfest verbunden, dessen Verzahnung ebenfalls mit dem Riemen 10 im Eingriff steht. Somit ist die Spindelmutter 20 vom Riemen 10 antreibbar.

Ins Innengewinde der Spindelmutter 20 ist eine Spindel 17 eingeschraubt. Die Spindel 17 ragt aus der Spindelmutter 20 axial beidseitig heraus.

Bei Drehung der Spindelmutter 20 verschiebt sich somit die Spindel 17, solange diese an der Drehbewegung gehindert wird. Hierzu ist die Spindel 17 über ein Kardangelenk mit einer weiteren in der Figur 1 nicht gezeigten, von dem Linearantrieb anzutreibenden Vorrichtung antreibbar. Dabei ist am Ende ein Bolzen in Bohrlöcher eine Gelenkaufnahmeteils 15 eingeführt, so dass der Bolzen drehbar gelagert ist in den zueinander koaxial ausgerichteten Bohrlöchern des Gelenkaufnahmeteils 15.

Zwischen den Bohrlöchern ist der Bolzen auch durchgehend durch ein durch ein Gelenkteil 16 durchgehendes Bohrloch ausgerichtet. Beabstandet von dem Bolzen weist das Gelenkteil 16 auch eine weitere durchgehende Bohrung auf, so dass hier ein Bolzen der anzutreibenden Vorrichtung hindurchführbar, der aber vorzugsweise senkrecht ausgerichtet ist zum vorgenannten Bolzen. Auf diese Weise ist also die Spindel 17 mittels eines Kardangelenks mit der anzutreibenden Vorrichtung verbindbar.

Abtriebsseitig ist mit dem Gehäuseteil 6 des Riementriebs ein Deckelteil 9 schraubverbunden, so dass das Innere des Riementriebs geschützt angeordnet ist.

Mit dem Gehäuseteil 6 ist ein Deckelteil 9 schraubverbunden. Das Gehäuseteil 6 ist zusammen mit dem Deckelteil 9 infolge vorgesehener Langlöcher relativ verschiebbar zum Lagerschild, wenn entsprechende Verbindungsschrauben gelöst werden. Auf diese Weise ist der Achsabstand zwischen der Rotorwellenachse und der Spindelachse der Spindel 17 einstellbar, also die Riemenspannung einstellbar

Das zweireihige Lager 2 ermöglicht einen sehr kompakten Aufbau.

Auf der von der Abtriebsseite axial abgewandten Seite ist am Lagerschild 1 ein Deckelteil 3 angeordnet, welches schraubverbunden ist mit dem Lagerschild 1.

Ein Faltenbalg 5, welcher die Spindel 17 umgibt ist mittels eines Klemmteils 4, insbesondere Klemmschelle, klemmverbunden mit dem Deckelteil 3. Auf dem vom Deckelteil 3 axial abgewandten Endbereich der Spindel 17 ist das andere Ende des Faltenbalgs 5 ebenfalls mit einem Klemmteil 13, insbesondere Klemmschelle, mit der Spindel 17 verbunden. Somit umgibt der Faltenbalg 5 ein Luftvolumen, in welchem ein Bereich der Spindel 17 angeordnet ist.

Der Elektromotor 7 treibt mittels seiner Rotorwelle den Riementrieb an, so dass die Spindelmutter 20 gedreht wird. Die Spindel 17 ist zumindest an einem ihrer Endbereiche mit einer anzutreibenden Vorrichtung verbunden, so dass sie an der Drehbewegung gehindert ist. Somit muss die Spindel 17 sich in Abhängigkeit von der Drehbewegung der Spindelmutter 20 linear, also axial vorwärts oder rückwärts bewegen.

Das vom Faltenbalg5 eingeschlossene Luftvolumen ist also abhängig von der Position der Spindel 17.

Des Weiteren sind Langlöcher am Gehäuseteil 6 des Riementriebs ausgeführt, so dass die Riemenspannung einstellbar ist.

Das Abdeckteil 18 ist auf der axial vom Lagerschild 1 und vom Deckelteil 3 abgewandten Seite des Riementriebs abgewandten Seite angeordnet und mit einem weiteren Faltenbalg 12 mittels eines weiteren Klemmteils 11, insbesondere Klemmschelle, klemmverbunden. Das Abdeckteil 18 mit Wellendichtring zur Abdichtung der drehenden Spindelmutter 20, ist zum Deckelteil 9 über Langlöcher verschieblich. Damit kann der Achsversatz durch das Riemenspannen kompensiert werden.

Ebenfalls mittels eines weiteren Klemmteils 13, insbesondere Klemmschelle, ist die Spindel 17 an ihrem vom Abdeckteil 18 abgewandten Endbereich klemmverbunden. Somit ist vom weiteren Faltenbalg 12 ein weiteres Luftvolumen eingeschlossen, in welchem sich ein Bereich der Spindel 17 befindet

Wenn nun die Linearposition der Spindel 17 sich ändert, ändert sich auch das von dem Faltenbalg 5 umschlossene Luftvolumen und zwar um etwa denselben Betrag, um den sich das vom Faltenbalg 12 umschlossene Luftvolumen ändert.

Die beiden Lufträume, also der zwischen Spindel 17 und Faltenbalg 5 angeordnete Luftraum und der zwischen Spindel 17 und Faltenbalg 12 angeordnete Luftraum, sind über einen Luftkanal verbunden, der mittels entsprechender Ausnehmungen im Abdeckteil 18, im Lagerschild 1 und im Deckelteil 3 angeordnet ist.

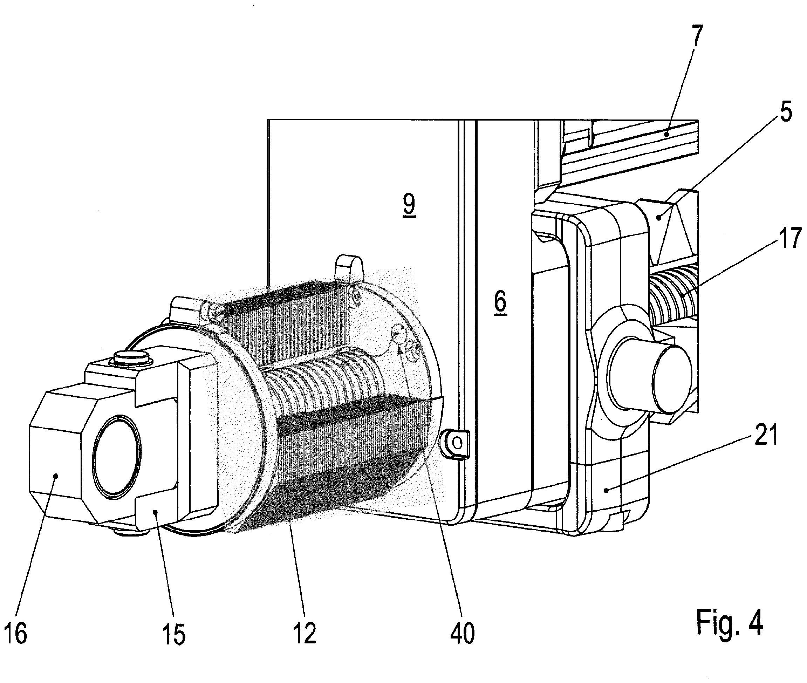

Wie in Figur 4 gezeigt, weist das Abdeckteil 18 also eine axial durchgehende Ausnehmung 40 auf, die den vom Faltenbalg 12 umgebenen Luftraum mit dem vom Riementrieb umgebenen Luftraum verbindet.

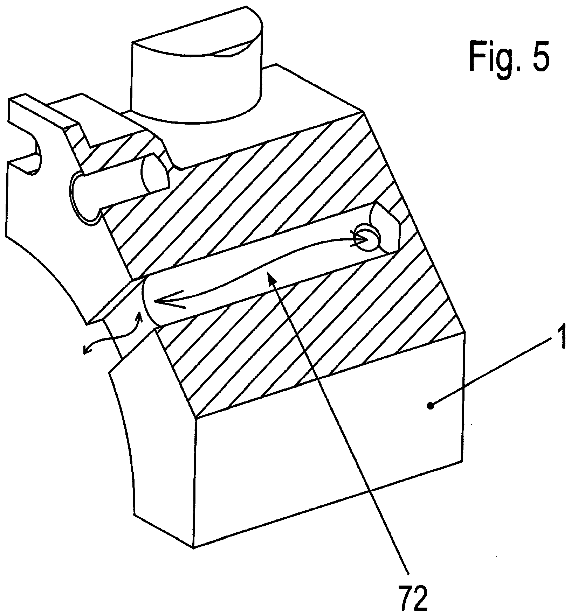

Wie in Figur 5 gezeigt weist das Lagerschild 1 eine Ausnehmung 72 auf, die als Luftkanal wirkt. Dabei wird die Luft radial um das vom Lagerschild 1 aufgenommene zweireihige Lager 2 herumgeführt. Somit wird die vom Lager 2 und von der Spindelmutter 20 erzeugte Wärme von der durch die Ausnehmung 72 strömende Luft aufgenommen. Da das Lager 2 zweireihig ausgeführt ist, wird eine hohe Wärmemenge in kleinem Volumen erzeugbar. Somit nimmt das Lagerschild 1 den so erzeugten Wärmestrom zunächst auf und wird dann zumindest teilweise über den durch die Ausnehmung 72 gebildeten Luftkanal entwärmt.

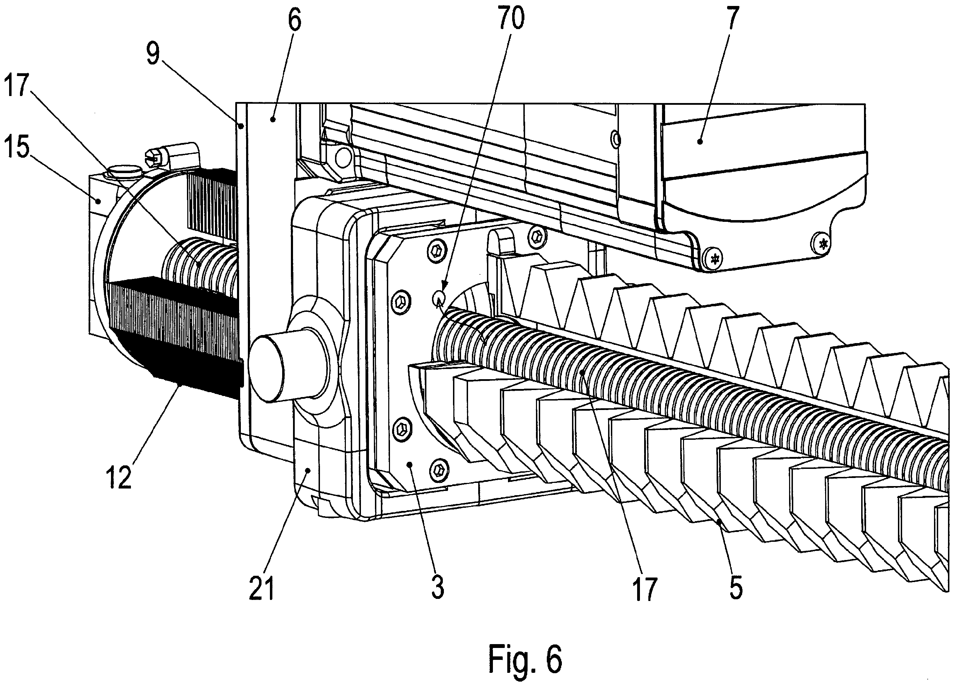

Wie in Figur 6 gezeigt, mündet die Ausnehmung 72 an ihrem dem Deckelteil 3 zugewandten Endbereich in der Öffnung 70 im Deckelteil 3, so dass Luft durchleitbar ist zu dem vom Faltenbalg 5 umschlossenen Luftraum.

Auf diese Weise ist ein Luftausgleich zwischen den von den Faltenbalgen (5, 12) umgebenen Lufträumen herstellbar und es entsteht auch bei Änderungen der Linearposition der Spindel 17 keine unzulässig hohen Überdrucke. Der Luftdruck in den beiden von den Faltenbalgen (5, 12) umgebenen Lufträumen ist also im Wesentlichen konstant. Dadurch können dünnwandige, kompaktbauende Faltenbalge verwendet werden, da Verformungen durch Druckunterschiede nicht auftreten.

Da die Summe der Volumina der beiden Lufträume unabhängig ist von der Linearposition der Spindel 17, wirkt für das Gesamtvolumen die Linearbewegung nur als isochorer Prozess.

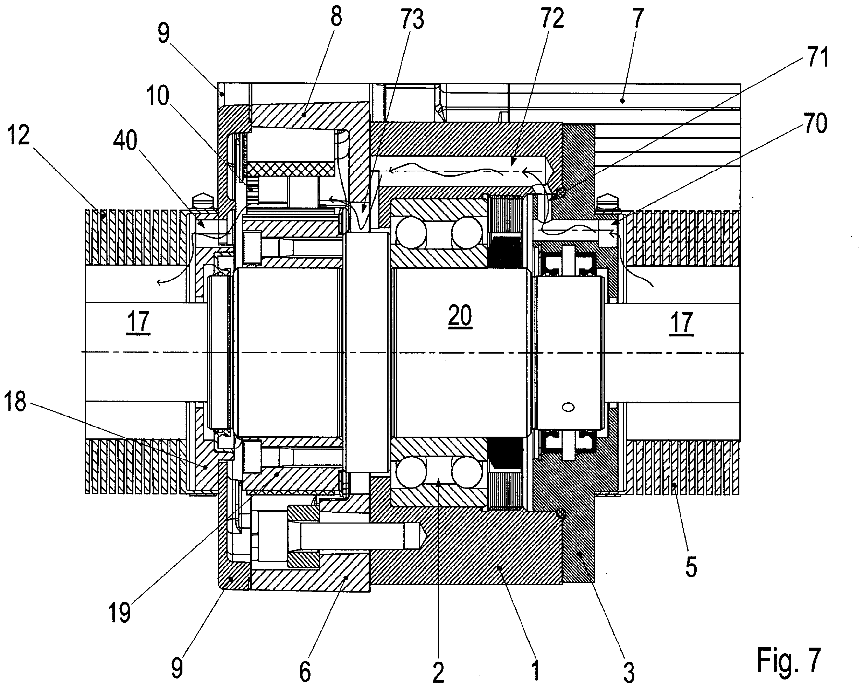

Wie in Figur 7 näher dargestellt, weist der in dem Lagerschild eingebrachte Luftkanal eine Radialbohrung 71 auf, welche vom Radialabstand der Öffnung 70 auf einen Radialabstand führt, welcher größer ist als der größte vom Lager 2 überdeckte Radialabstand. Die Radialbohrung 71 mündet in die Ausnehmung 72, welche als axiale Bohrung ausgeführt ist, welche nicht durchgehend ausgeführt sein muss, also als Sacklochbohrung ausgeführt sein darf.

Die Ausnehmung 72 ist also radial von dem Außenring des Lagers 2 beabstandet.

Die Ausnehmung 72 mündet über einen wiederum radial verlaufenden Spalt, also eine radial verlaufende Ausnehmung im vom Riementrieb umgebenen Luftraum, der über die Ausnehmung 40 mit dem vom Faltenbalg 12 umgebenen Luftraum verbunden ist.

Das Lager 2 ist an seinem dem Faltenbalg 12 zugewandten Endbereich gegen einen im Lagerschild 1 ausgebildeten Absatz angestellt und von einem auf der axial davon abgewandten Seite angeordneten, mit dem Lagerschild 1 schraubverbundenen Klemmring angedrückt.

Die Ausnehmung 70 ist radial von einem im Deckelteil 3 aufgenommenen Wellendichtring beabstandet und entwärmt somit das Deckelteil 3, wenn ein Luftstrom durch die Ausnehmung 70 strömt.

Da vom Lager 2, von der Spindelmutter 20 und vom Wellendichtring nur Wärme erzeugt wird, wenn der Motor eine Drehbewegung der Spindelmutter 20 erzwingt, wird die Wärme abtransportiert von dem durch die dadurch erzwungene Änderung der Linearposition bewirkten Luftstrom zum Druckausgleich zwischen den von den Faltenbalgen (5, 12) umgebenen Lufträumen.

Am Lagerschild 1 ist beidseitig in Querrichtung zur Achsrichtung der Spindel 17 jeweils eine Erhebung ausgebildet, die als vorzugsweise zylindrischer Zapfenabschnitt hervorsteht und ausgeformt ist.

Zur Befestigung am stationären Teil der anzutreibenden Vorrichtung ist ein Kardangelenk vorgesehen.

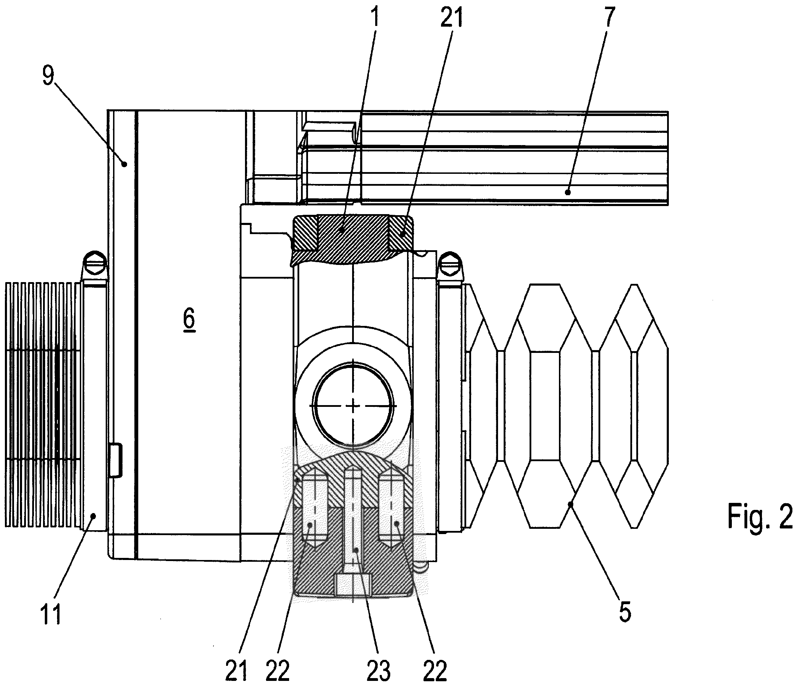

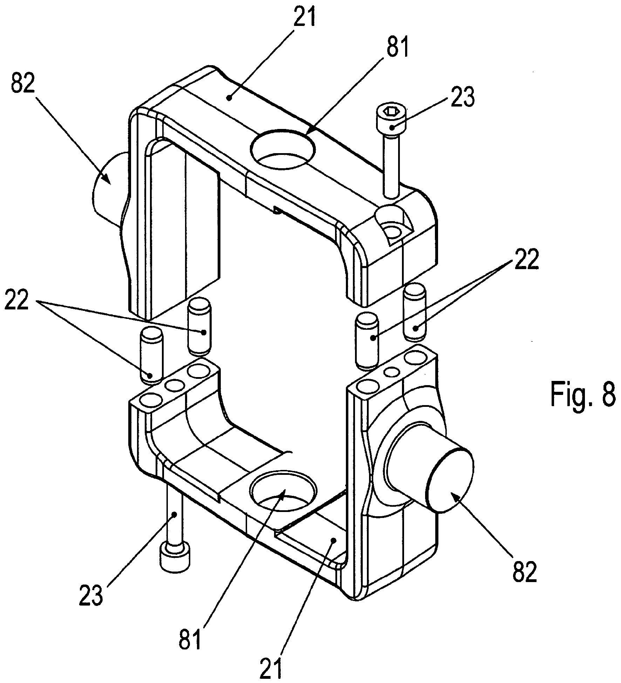

Wie in Figur 2 zusammen mit Figur 8 gezeigt, ist auf die jeweilige Erhebung ein jeweiliges Gelenkteil 21 aufgesteckt, wobei die beiden Gelenkteile mittels eines oder mehreren Schraubteilen 23 miteinander verbunden sind und dabei die beiden Gelenkteile durch Bolzen 22 zentriert sind, welche in jeweilige Sacklöcher der beiden Gelenkteile 21 eingesteckt sind. Die Kraftübertragung erfolgt ganz oder im Wesentlichen über den durch die bolzen 22 bewirkten Formschluss.

Jedes der Gelenkteile 21 weist jeweils eine runde, insbesondere zylindrische Ausnehmung 81 auf, durch welche die jeweilige Erhebung des jeweiligen Gelenkteils 21 gesteckt ist.

Die beiden Gelenkteile 21 sind gleichartig ausgeführt und - wie in der in Figur 8 dargestellten explodierten Darstellung gezeigt - mittels in Sacklochbohrungen teilweise eingesteckten Bolzen 22 zentriert. Mittels der Schraubteile 23 sind die beiden Gelenkteile 21 aneinandergedrückt, insbesondere ist das jeweilige Schraubteil durch ein Bohrloch eines jeweiligen Gelenkteils 21 durchgesteckt und mit seinem Gewindebereich eingeschraubt in eine Gewindebohrung des jeweils anderen Gelenkteils 21, so dass der jeweilige Schraubenkopf des jeweiligen Schraubteils das erste Gelenkteil 21 gegen das andere drückt.

An jedem Gelenkteil 21 ist ein jeweiliger Zapfenabschnitt 82 ausgeformt, der in Querrichtung zur Achsrichtung der Spindel 17 und in Querrichtung zu den Erhebungen des Lagerschildes nach außen hervorragt.

Zur Reduzierung der Reibung sind die Erhebungen und/oder Zapfenabschnitte 82 oberflächenbehandelt, insbesondere karbonitriert. Die Erhebungen sind mittels Spielpassung in die Ausnehmungen 81 eingesteckt. Ebenso sind die Zapfenabschnitte 82 mit Spielpassung in entsprechenden Ausnehmungen der anzutreibenden Vorrichtung eingesteckt. Auf diese Weise ist ein nicht verschwindender Bewegungsfreiheitsgrad vorhanden.

Der Vorteil der zweiteiligen Ausführung des Kardangelenkstücks gemäß Figur 8 ist, dass eine einfache Montage ausführbar ist. Denn die beiden Gelenkteile 21 werden jeweils von radial außen kommend mit ihren Ausnehmungen 81 auf die am Lagerschild 1 ausgebildeten Zapfenabschnitte aufgeschoben und dann miteinander schraubverbunden. Auf diese Weise ist eine einfache Montage ermöglicht.

Der vom Kardangelenk in axialer Richtung, also in der Linearantriebsrichtung des Linearantriebs, überdeckte Bereich überlappt mit dem vom Lager 2 axial überdeckten Bereich und auch mit dem vom Lagerschild 1 axial überdeckten Bereich.

Somit ist eine erhöhte Stabilität erreichbar. Denn der durch die Spielpassungen bewirkte Freiheitsgrad findet somit im Beriech des Lagers 2 seinen Ursprung.

Am vom Lagerschild 1 abgewandten Endbereich der Spindel 17 ist diese zum Faltenbalg 5 hin luftdicht abgeschlossen und somit auch vor Verschmutzung durch Schmutzpartikel der Umgebung geschützt.

Am anderen Endbereich der Spindel 17 ist diese ebenfalls luftdicht abgeschlossen zum weiteren Faltenbalg 12 hin. Außerdem ist an diesem Endbereich ein Gelenkaufnahmeteil 15 mit der Spindel verbunden, das einen Bolzen lagert, der in einer Bohrung eines Gelenkteils 16 aufgenommen ist. Das Gelenkteil 16 weist eine Bohrung auf, die quer zum im Gelenkteil aufgenommenen Bolzen ausgerichtet ist.

Somit ist auch hier eine Verbindung mit der anzutreibenden Vorrichtung über ein Kardangelenk ermöglicht, welche Winkelfehler ausgleicht und somit Verspannungen reduzierbar oder vermeidbar macht. Vorzugsweise ist das Kardangelenk zweiwertig ausgeführt.

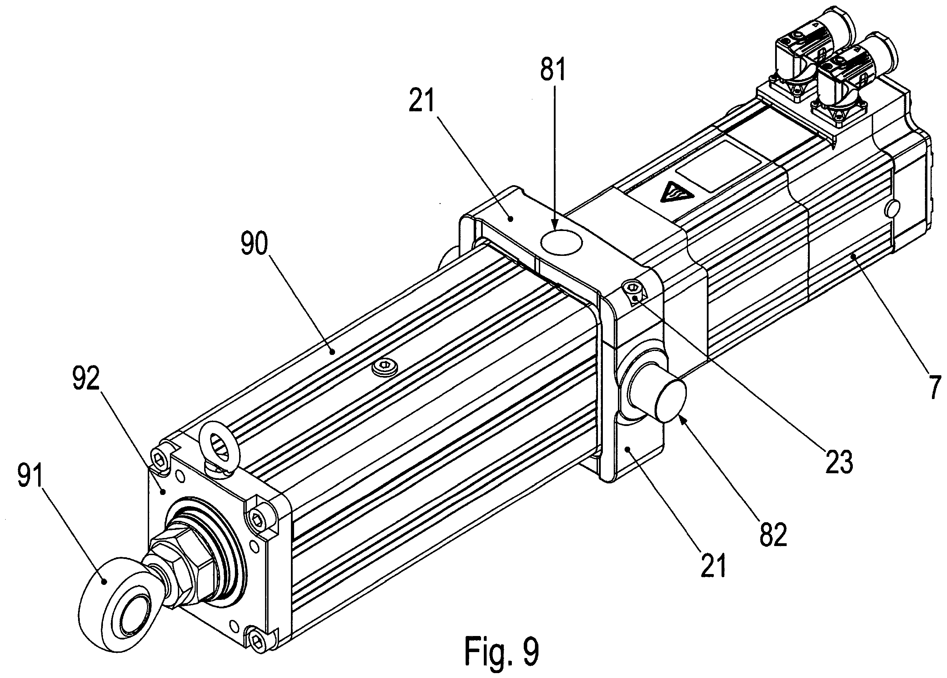

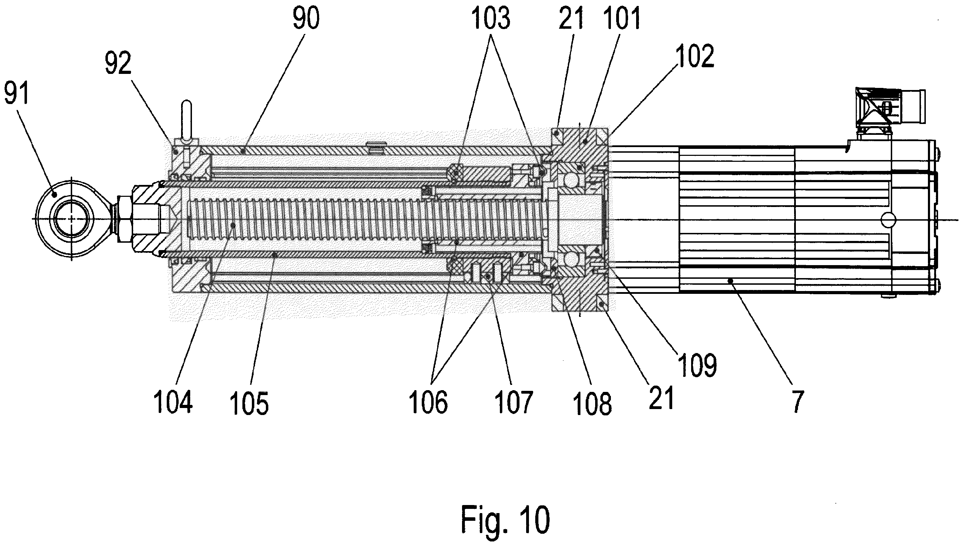

Wie in Figur 9 und 10**,** die ein anderer nicht erfindungsgemäßer Linearantrieb in Schrägansicht darstellen, gezeigt, ist die Verbindung mit der anzutreibenden Vorrichtung über ein Kardangelenk auch bei einem anderen Linearantrieb ermöglicht, bei welchem der Elektromotor 7, insbesondere dessen Rotorwelle kollinear mit der Spindel 104 angeordnet ist.

Dabei ist nicht die mit der Rotorwelle des Elektromotors 7 drehfest verbundene Spindel 104 linear bewegbar, sondern die Spindelmutter 106. Da die Spindel 104 drehfest mit der linear nicht verschiebbar angeordneten Rotorwelle des Elektromotors 7 verbunden ist, wird bei Drehen der Rotorwelle die Spindelmutter 106 linear verschoben, da ein Nutenstein107 mit der Spindelmutter 106 schraubverbunden ist und in eine axial sich erstreckende Nut des Gehäuseteils 90 eintaucht. Somit ist der Nutenstein 107 nur in axialer Richtung entlang der Nut, also Längsnut, bewegbar. Mit der Spindelmutter 106 ist eine Kolbenstange 105 verbunden, welche mit der Spindelmutter 106 linear verfährt und am vom Motor 7 abgewandten Endbereich des Gehäuseteils 90 aus einem mit dem Gehäuseteil 90 verbundenen Deckelteil 92 herausragt. Zwischen dem Gehäuseteil 90 und der Kolbenstange 105 ist eine Dichtung angeordnet.

Am vom Elektromotor 7 abgewandten Endbereich der Kolbenstange 105 ist ein Gelenkteil 91 angeordnet, so dass auch hier eine Befestigung mittels eines Kugelgelenks ausführbar ist. Bei dieser Ausführung ist ein Kugelgelenk mit zusätzlichem Freiheitsgrad möglich, da die Kolbenstange verdrehgesichert ausführt. Ansonsten müsste das Reaktionsmoment der Spindel über das Kreuzgelenkteil in die anzutreibende Vorrichtung abgeleitet werden.

Die Kolbenstange 105 ist in ein Verschlussteil eingeschraubt, welches das vom Lagerschild 101 abgewandte Ende der hohlen, insbesondere hohlzylindrisch ausgeführten, Kolbenstange 105 abschließt.

Am dem Elektromotor 7 zugewandten Endbereich des Gehäuseteils 90 ist ein Lagerschild 101 angeordnet, welches ein Lager 102 aufnimmt, mittels dessen die Rotorwelle gelagert ist. Das Lager 102 ist von einem ins Lagerschild 101 eingeschraubten Klemmring 108 gegen eine Stufe des Lagerschildes 101 gedrückt.

An der Spindelmutter 106 sind axial beidseitig Dämpfungsringe 103 angeordnet. Somit ist ein hartes Aufschlagen an den axialen Endpositionen verhindert. Der dem Lagerschild 101 zugewandt angeordnete Dämpfungsring 103 schlägt an der ersten axialen Endposition auf einen Klemmring 108 auf, der ins Lagerschild 101 eingeschraubt ist und das Lager 102 gegen einen am Lagerschild 101 ausgebildeten Absatz andrückt. Die über das Lager 102 gelagerte, mit der Spindel 104 drehfest verbundene Rotorwelle ist mittels eines ebenfalls im Lagerschild 101 aufgenommenen Wellendichtrings 109 abgedichtet. Somit ist der zumindest teilweise mit Schmierstoff befüllte Innenraum des Spindeltriebs, insbesondere das mit dem Schmierstoff geschmierte Lager 102, abgedichtet von dem Innenraum des Elektromotors.

Das Lagerschild 101 weist wiederum hervorragende Erhebungen auf, so dass ein Kardangelenk gemäß Figur 8 vorsehbar ist. Auf diese Weise ist wiederum die anzutreibende Vorrichtung mittels Kardangelenk verbindbar, wobei der vom Kardangelenk überdeckte axiale Bereich wiederum überlappt mit dem vom Lager 102 überdeckten Bereich und/oder mit dem vom Lagerschild 101 überdeckten axialen Bereich. Somit ist das Kardangelenk wiederum in demjenigen Bereich angeordnet, in welchem große Kräfte einleitbar sind, insbesondere also ins Lagerschild 101. Somit ist eine hohe Stabilität erreichbar.

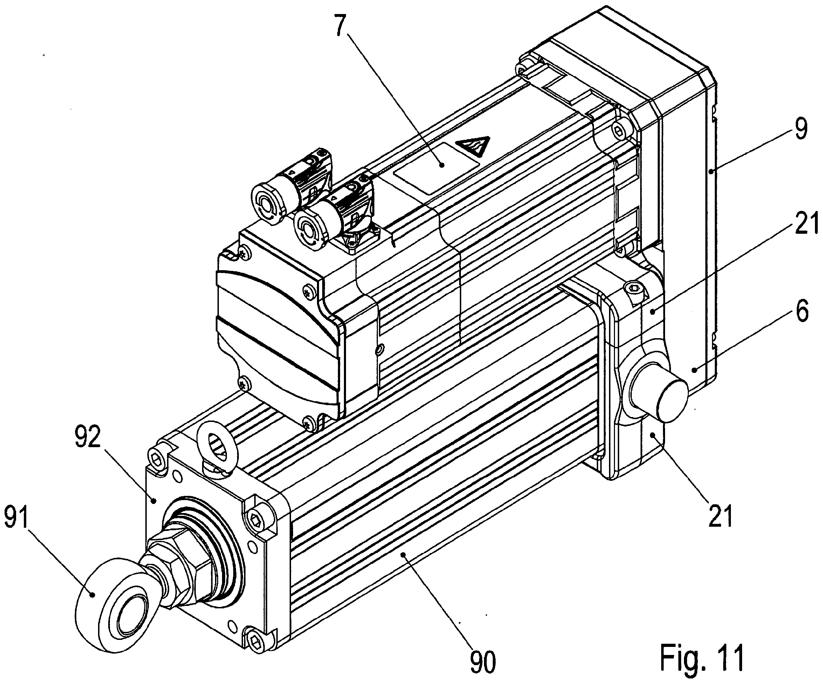

Wie in Figur 11 gezeigt, ist bei einem weiteren Ausführungsbeispiel der Spindeltrieb nach Figur 9 und 10 verwendbar, wobei statt des Antriebs der Spindel 104 durch einen Elektromotor die Spindel 104 mittels eines Riementriebs angetrieben wird, welcher durch einen Elektromotor 7 angetrieben ist. Auf diese Weise sind wiederum Elektromotor 7 und Spindeltrieb voneinander beabstandet angeordnet.

Hierzu ist im Lagerschild des Spindeltriebs die Spindel 104 über ein Lager drehbar gelagert, welches im Lagerschild des Spindeltriebs aufgenommen ist. Außerdem sitzt im Riemengehäuse 6 eine zusätzliche Lagerstelle mit Riemenscheibe, welche das Lager und eine Rotationsabdichtung vor Kräften des Riemenzuges entkoppelt. Die Spindel ist dabei drehfest verbunden mit einem ersten Verzahnungsteil des Riementriebs, wobei die Verzahnung des Verzahnungsteils im Eingriff ist mit der Verzahnung des Riemens des Riementriebs, wobei die Verzahnung des Riemens des Riementriebs auch im Eingriff ist mit einem zweiten Verzahnungsteil des Riementriebs, welches drehfest mit der Rotorwelle des Elektromotors 7.

Am Lagerschild des Spindeltriebs sind wiederum in Querrichtung zur Achsrichtung der Spindel 104 Erhebungen ausgeformt, welche vorzugsweise als zylindrische Zapfenabschnitte ausgeformt sind. Auf diese Erhebungen des Lagerschildes ist wiederum ein jeweiliges Gelenkteil 21 aufsetzbar. Somit ist das Kardangelenk nach Figur 8 auf dem Lagerschild anordenbar und auf diese Weise die anzutreibende Vorrichtung über ein Kardangelenk verbindbar.

Bei weiteren erfindungsgemäßen Ausführungsbeispielen ist statt des Zahnriemens und der Verzahnungsteile nur ein Riemen und Riemenscheiben verwendet. Dabei sind Riemen und Riemenscheiben kraftschlüssig verbunden.

### Bezugszeichenliste

1 Lagerschild
2 Wälzlager, insbesondere zweireihiges Wälzlager
3 Deckelteil
4 Klemmteil, insbesondere Schelle
5 erster Faltenbalg
6 Gehäuseteil für Riementrieb
7 Elektromotor
8 Verzahnungsteil
9 Deckelteil
10 Riemen, insbesondere Zahnriemen
11 Klemmteil, insbesondere Schelle
12 zweiter Faltenbalg
13 Klemmteil, insbesondere Schelle
15 Gelenkaufnahmeteil
16 Gelenkteil
17 Spindel, insbesondere Gewindespindel
18 Abdeckteil
19 Verzahnungsteil
20 Spindelmutter
21 Gelenkteil
22 Bolzen
23 Schraubteil
40 Ausnehmung, insbesondere durch das Abdeckteil 18 durchgehende Ausnehmung
70 Öffnung mit durch das Deckelteil 3 durchgehender Ausnehmung
71 Radialbohrung
72 Ausnehmung, insbesondere Umlenkanal
73 Öffnung, insbesondere ringförmige Ringöffnung
81 Durchlass für Zapfenabschnitt
82 Zapfenabschnitt
90 Gehäuseteil für Spindeltrieb
91 Gelenkteil
92 Deckelteil
101 Lagerschild
102 Wälzlager, insbesondere Kugellager
103 Dämpfungsring
104 Spindel
105 Kolbenstange
106 Spindelmutter
107 Nutenstein
108 Klemmring, eingeschraubt ins Lagerschild 101
109 Wellendichtring

## Patentansprüche

1. Linearantrieb mit Spindelmutter (20) und Spindel (17) sowie mit einem Lagerschild (1), in welchem ein Lager (2) aufgenommen ist zur drehbaren Lagerung der Spindelmutter (20), **wobei die Spindel (17) in die Spindelmutter (20) eingeschraubt ist,**
**wobei** mittels des im Lagerschild (1) aufgenommenen Lagers die Spindelmutter (20) drehbar gelagert ist,
wobei die Spindelmutter (20) drehfest mit einer ersten Riemenscheibe eines Riemengetriebes verbunden ist, welche kraftschlüssig mit einem Riemen (10) des Riemengetriebes im Eingriff ist oder verbunden ist, wobei der Riemen (10) mit einer von der ersten Riemenscheibe (19) beabstandeten Riemenscheibe (8) im Eingriff ist oder verbunden ist,
wobei die zweite Riemenscheibe (8) drehfest mit der Rotorwelle eines Elektromotors (7) verbunden ist,
**wobei**
**am Lagerschild (1) in Querrichtung zur Achse der Spindel (17) hervorragende erste Erhebungen ausgeformt sind zur Verbindung mit einer anzutreibenden Vorrichtung mittels Kardangelenk,**
**wobei zwei miteinander verbundene Gelenkteile (16, 21) in Querrichtung zur Achse** der **Spindel (17) hervorragende zweite Erhebungen aufweisen,**
**wobei die zweiten Erhebungen senkrecht ausgerichtet sind zu den ersten Erhebungen,**
**dadurch gekennzeichnet, dass** jedes der Gelenkteile (16,21) eine Ausnehmung aufweist, in welche jeweils eine der ersten Erhebungen eingesteckt ist, und dass **zur Zentrierung der beiden Gelenkteile (16, 21) relativ zueinander Bolzen (22) jeweils beidseitig in Ausnehmungen der Gelenkteile (16, 21) hineinragen.**

2. Linearantrieb nach Anspruch 1,
**dadurch gekennzeichnet, dass**
**das Lager (2) die einzige Lagerstelle der Spindelmutter (20) ist, insbesondere wobei die Lagerstelle als zweireihiges Lager (2)** ausgeführt ist.

3. Linearantrieb nach Anspruch 1,
**dadurch gekennzeichnet, dass**
das im Lagerschild (1) aufgenommene Lager (2) als zweireihiges Wälzlager ausgeführt ist oder dass
das im Lagerschild (1) aufgenommene Lager (2) aus zwei Rillenkugellagern gebildet ist, deren axialer Abstand kleiner ist als die jeweilige axiale Breite jedes der Rillenkugellager.

4. Linearantrieb nach mindestens einem der vorangegangenen Ansprüche,
**dadurch gekennzeichnet, dass**
**die beiden Gelenkteile (16, 21) mittels Schraubteilen miteinander verbunden sind,** insbesondere wobei eine jeweilige Verbindungsschraube durch eine jeweilige Ausnehmung eines Gelenkteils durchgeführt ist und in eine Gewindebohrung des jeweils anderen Gelenkteils eingeschraubt ist, wobei die Bolzen (22) zur formschlüssigen Übertragung von Kräften vorgesehen sind und/oder der jeweilige Schraubenkopf das jeweilige Gelenkteil gegen das jeweils andere Gelenkteil drückt.

5. Linearantrieb nach mindestens einem der vorangegangenen Ansprüche,
**dadurch gekennzeichnet, dass**
der in Spindelachsrichtung vom Lagerschild (1) überdeckte Bereich mit dem vom Kardangelenk und/oder von den ersten und/oder zweiten Erhebungen in Spindelachsrichtung überdeckten Bereich zumindest überlappt.

6. Linearantrieb nach mindestens einem der vorangegangenen Ansprüche,
**dadurch gekennzeichnet, dass**
der in Spindelachsrichtung vom vom Lagerschild (1) aufgenommenen Lager (2) überdeckte Bereich mit dem vom Kardangelenk, von den beiden Gelenkteilen des Kardangelenks und/oder von den ersten und/oder zweiten Erhebungen in Spindelachsrichtung überdeckten Bereich zumindest überlappt.

7. Linearantrieb nach Anspruch 4,
**dadurch gekennzeichnet, dass**
die ersten und/oder zweiten Erhebungen zylinderförmig ausgebildet sind
und/oder dass die am jeweiligen Gelenkteil angeordnete Ausnehmung zur Verbindung mit Spielpassung mit der jeweiligen ersten Erhebung zylinderförmig ausgebildet ist.

8. Linearantrieb nach Anspruch 4 oder 7,
**dadurch gekennzeichnet, dass**
jedes Gelenkteil einen L-förmigen Grundkörper aufweist, wobei an einem ersten Schenkel des L die zweite Erhebung angeordnet ist und an dem anderen Schenkel die Ausnehmung angeordnet ist.

9. Linearantrieb nach mindestens einem der vorangegangenen Ansprüche,
**dadurch gekennzeichnet, dass**
die beiden Gelenkteile (16, 21) des Kardangelenks gleichartig ausgeführt sind.

10. Linearantrieb nach mindestens einem der vorangegangenen Ansprüche,
**dadurch gekennzeichnet, dass**
die Spindelmutter (20) in einem Lagerschild (1) drehbar gelagert ist,
wobei die Spindel (17) durch die Spindelmutter (20) hindurchgeführt ist, und/oder die Spindel (17) beidseitig aus dem Lagerschild (1) hervorragt,
wobei ein erster Faltenbalg (5) einen ersten Bereich der Spindel (17) zumindest teilweise umgibt und ein zweiter Faltenbalg (12) einen zweiten Bereich der Spindel (17) zumindest teilweise umgibt,
insbesondere wobei der erste Bereich und der zweite Bereich voneinander beabstandet sind, insbesondere wobei zumindest das Lagerschild (1) zwischengeordnet ist,
wobei das Lagerschild (1) eine durchgehende Ausnehmung aufweist zum Luftdruckausgleich zwischen dem von dem ersten Faltenbalg (5) umgebenen Luftraum und dem von dem zweiten Faltenbalg (12) umgebenen Luftraum.

11. Linearantrieb nach Anspruch 10,
**dadurch gekennzeichnet, dass**
das Lagerschild (1) zwischen dem ersten und dem zweiten Faltenbalg (5, 12) angeordnet ist, insbesondere also der erste Faltenbalg (5) vom zweiten Faltenbalg (12) beabstandet ist, insbesondere mittels zumindest des Lagerschilds (1).

12. Linearantrieb nach mindestens einem der vorangegangenen Ansprüche 10 bis 11,
**dadurch gekennzeichnet, dass**
der erste Faltenbalg (5) mit einem Abdeckteil (18) verbunden ist, welches lösbar verbunden ist mit einem Deckelteil (9) eines Riementriebs,
wobei das Deckelteil (9) mit einem Gehäuseteil (6) des Riementriebs verbunden ist, welches mit dem Lagerschild (1) verbunden ist, insbesondere an dessen vom zweiten Faltenbalg (12) abgewandten Seite des Lagerschilds,
wobei das Lagerschild (1), insbesondere an dessen vom ersten Faltenbalg (5) abgewandter Seite, mit einem Deckelteil (3) verbunden oder einstückig ausgeführt ist,
wobei der zweite Faltenbalg (12) mit dem Deckelteil (3) verbunden ist.

13. Linearantrieb nach Anspruch 12,
**dadurch gekennzeichnet, dass**
das Abdeckteil (18) eine durchgehende Ausnehmung aufweist, welche einen Luftdurchlass zwischen dem von dem ersten Faltenbalg (5) umgebenen Luftraum und dem vom Riementrieb, insbesondere vom Gehäuseteil (6) des Riementriebs umgebenen und vom Deckelteil (9) sowie vom Abdeckteil (18) Luftraum, umgebenen Luftraum bewirkt,
und/oder dass
das insbesondere mit dem zweiten Faltenbalg (12) verbundene Deckelteil (3) eine durchgehende Ausnehmung aufweist, welche einen Luftdurchlass zwischen dem von dem zweiten Faltenbalg (12) umgebenen Luftraum und der durch das Lagerschild (1) durchgehenden Ausnehmung bewirkt,
und/oder dass
die durch das Lagerschild (1) durchgehende Ausnehmung vom Lager (2) beabstandet ist,
insbesondere einen größeren Radialabstand aufweist als das Lager (2), insbesondere zur Achse der Spindel,
und/oder dass
die durch das Lagerschild (1) durchgehende Ausnehmung einerseits in die durch das Deckteil (3) durchgehende Ausnehmung mündet und andererseits in den vom Riementrieb umgebenen Luftraum,
und/oder dass
im Lagerschild (1) oder vom Deckelteil (3) ein Wellendichtring aufgenommen ist, welcher zur Spindelmutter (20) hin abdichtet, insbesondere wobei der vom zweiten Faltenbalg (12) umgebene Luftraum gegenüber dem vom Lager (2) überdeckten Raumbereich abgedichtet ist mittels des Wellendichtrings.

14. Linearantrieb nach mindestens einem der vorangegangenen Ansprüche,
**dadurch gekennzeichnet, dass**
das Kardangelenk zur Verbindung mit einem Teil der anzutreibenden Vorrichtung an einem Endbereich der Spindel (17) angeordnet ist,
insbesondere wobei die Drehachsen dieses Gelenks jeweils senkrecht zur Achsrichtung der Spindel (17) ausgerichtet sind, insbesondere wobei die Drehachsen voneinander beabstandet sind.

## Claims

1. A linear actuator having a spindle nut (20) and spindle (17) as well as having a bearing plate (1) in which a bearing (2) is received for rotatable mounting of the spindle nut (20),
wherein the spindle (17) is screwed into the spindle nut (20),
wherein the spindle nut (20) is rotatably mounted by means of the bearing received in the bearing plate (1),
wherein the spindle nut (20) is connected in a rotationally-fixed manner to a first pulley of a belt drive, which pulley engages or is connected to a belt (10) of the belt drive in a force-locked manner, wherein the belt (10) engages or is connected to a pulley (8) spaced apart from the first pulley (19),
wherein the second pulley (8) is connected to the rotor shaft of an electric motor (7) in a rotationally-fixed manner,
wherein
first protuberances projecting in a transverse direction to the axis of the spindle (17) are formed at the bearing plate (1) and are for connection by means of a cardan joint to a device to be driven,
wherein two joint parts (16, 21) connected to one another have second protuberances projecting in a transverse direction to the axis of the spindle (17),
wherein the second protuberances are oriented perpendicularly to the first protuberances, **characterised in that**
each of the joint parts (16, 21) has an opening into which in each case there is inserted one of the first protuberances, and **in that**
for centering of the two joint parts (16, 21) relative to one another, bolts (22) in each case project at both sides into openings of the joint parts (16, 21).

2. A linear actuator according to claim 1,
**characterised in that**
the bearing (2) is the single support point of the spindle nut (20),
in particular wherein the support point is in the form of a double-row bearing (2).

3. A linear actuator according to claim 1,
**characterised in that**
the bearing (2) received in the bearing plate (1) is in the form of a double-row rolling bearing or **in that**
the bearing (2) received in the bearing plate (1) is formed from two deep-groove ball bearings whose axial spacing is smaller than the respective axial width of each of the deep-groove ball bearings.

4. A linear actuator according to at least one of the preceding claims,
**characterised in that**
the two joint parts (16, 21) are connected to one another by means of screw parts,
in particular wherein a respective connecting screw is passed through a respective opening of a joint part and is screwed into a threaded bore of the respective other joint part, wherein the bolts (22) are provided for form-locked transfer of forces and/or the respective screw head presses the respective joint part against the respective other joint part.

5. A linear actuator according to at least one of the preceding claims,
**characterised in that**
the region covered in a spindle axis direction by the bearing plate (1) at least overlaps with the region covered in a spindle axis direction by the cardan joint and/or by the first and/or second protuberances.

6. A linear actuator according to at least one of the preceding claims,
**characterised in that**
the region covered in a spindle axis direction by the bearing (2) received by the bearing plate (1) at least overlaps with the region covered in a spindle axis direction by the cardan joint, by the two joint parts of the cardan joint and/or by the first and/or second protuberances.

7. A linear actuator according to claim 4,
**characterised in that**
the first and/or second protuberances are cylindrical
and/or **in that** the opening, arranged at the respective joint part, for connection with clearance fit to the respective first protuberance is cylindrical.

8. A linear actuator according to claim 4 or 7,
**characterised in that**
each joint part has an L-shaped basic body, wherein the second protuberance is arranged at a first limb of the Land the opening is arranged at the other limb.

9. A linear actuator according to at least one of the preceding claims,
**characterised in that**
the two joint parts (16, 21) of the cardan joint are formed in the same manner.

10. A linear actuator according to at least one of the preceding claims,
**characterised in that** the spindle nut (20) is rotatably mounted in a bearing plate (1),
wherein the spindle (17) is passed through the spindle nut (20), and/or the spindle (17) projects from the bearing plate (1) at both sides,
wherein a first bellows (5) at least partially surrounds a first region of the spindle (17) and a second bellows (12) at least partially surrounds a second region of the spindle (17),
in particular wherein the first region and the second region are spaced apart from one another, in particular wherein at least the bearing plate (1) is arranged therebetween,
wherein the bearing plate (1) has a through-passing opening for air compensation between the air space surrounded by the first bellows (5) and the air space surrounded by the second bellows (12).

11. A linear actuator according to claim 10,
**characterised in that**
the bearing plate (1) is arranged between the first and the second bellows (5, 12), in particular therefore the first bellows (5) is spaced apart from the second bellows (12), in particular by means of at least the bearing plate (1).

12. A linear actuator according to at least one of the preceding claims 10 to 11,
**characterised in that**
the first bellows (5) is connected to a covering part (18) detachably connected to a cover part (9) of a belt drive,
wherein the cover part (9) is connected to a housing part (6) of the belt drive, which is connected to the bearing plate (1), in particular at its bearing-plate side remote from the second bellows (12),
wherein the bearing plate (1) in particular at its side remote from the first bellows (5), is connected to or in one piece with a cover part (3),
wherein the second bellows (12) is connected to the cover part (3).

13. A linear actuator according to claim 12,
**characterised in that**
the covering part (18) has a through-passing opening which brings about an air passage between the air space surrounded by the first bellows (5) and the air space surrounded by the belt drive, in particular by the housing part (6) of the belt drive, and surrounded by the cover part (9) as well as by the covering part (18),
and/or **in that**
the cover part (3), in particular connected to the second bellows (12), has a through-passing opening which brings about an air passage between the air space surrounded by the second bellows (12) and the opening passing through the bearing plate (1) and/or **in that**
the opening passing through the bearing plate (1) is spaced apart from the bearing (2),
in particular has a greater radial spacing than the bearing (2), in particular with respect to the axis of the spindle,
and/or **in that**
the opening passing through the bearing plate (1) opens on the one hand into the opening passing through the cover part (3) and on the other hand into the air space surrounded by the belt drive,
and/or **in that**
a shaft-sealing ring is received in the bearing plate (1) or by the cover part (3) and seals towards the spindle nut (20),
in particular wherein the air space surrounded by the second bellows (12) is sealed by means of the shaft-sealing ring with respect to the spatial region covered by the bearing (2).

14. A linear actuator according to at least one of the preceding claims,
**characterised in that**
the cardan joint for connection to a part of the device to be driven is arranged at an end region of the spindle (17),
in particular wherein the rotational axes of this joint are in each case oriented perpendicularly to the axial direction of the spindle (17), in particular wherein the rotational axes are spaced apart from one another.

## Revendications

1. Entraînement linéaire comprenant un écrou (20) de broche et une broche (17), ainsi qu'un bouclier de roulement (1) dans lequel un palier (2) est logé en vue du montage rotatif dudit écrou (20), la broche (17) étant vissée dans ledit écrou (20),
lequel écrou (20) est monté à rotation au moyen du palier logé dans ledit bouclier de roulement (1),
sachant que ledit écrou (20) de broche est relié, avec verrouillage rotatif, à une première poulie d'une transmission par courroie qui est en prise ou en liaison, par engagement positif, avec une courroie (10) de ladite transmission par courroie, laquelle courroie (10) est en prise ou en liaison avec une poulie (8) située à distance de la première poulie (19), la seconde poulie (8) étant reliée, avec verrouillage rotatif, à l'arbre rotorique d'un moteur électrique (7),
sachant que
des premières zones protubérantes, en saillie dans la direction transversale par rapport à l'axe de la broche (17), sont ménagées sur le bouclier de roulement (1) en vue de la liaison avec un dispositif à entraîner au moyen d'une articulation à la Cardan,
deux parties (16, 21) de l'articulation, reliées l'une à l'autre, étant munies de secondes zones protubérantes faisant saillie dans la direction transversale par rapport audit axe de la broche (17),
lesquelles secondes zones protubérantes sont orientées perpendiculairement aux premières zones protubérantes,
**caractérisé par le fait que**
chacune des parties (16, 21) de l'articulation comporte un évidement dans lequel l'une des premières zones protubérantes est respectivement emboîtée ; et **par le fait que** des tenons (22) pénètrent à chaque fois, de part et d'autre, dans des évidements des parties (16, 21) de l'articulation en vue de centrer, l'une par rapport à l'autre, lesdites deux parties (16, 21) de ladite articulation.

2. Entraînement linéaire selon la revendication 1,
**caractérisé par le fait que**
le palier (2) est l'unique point de support de l'écrou (20) de broche,
ledit point de support étant notamment réalisé en tant que palier (2) à deux rangées.

3. Entraînement linéaire selon la revendication 1,
**caractérisé par le fait que**
le palier (2), logé dans le bouclier de roulement (1), est réalisé sous la forme d'un palier à roulements comprenant deux rangées ;
ou **par le fait que**
ledit palier (2), logé dans le bouclier de roulement (1), est constitué de deux roulements à billes rainurés
dont l'espacement axial est inférieur à la largeur axiale respective de chacun desdits roulements à billes rainurés.

4. Entraînement linéaire selon au moins l'une des revendications précédentes,
**caractérisé par le fait que**
les deux parties (16, 21) de l'articulation sont reliées l'une à l'autre au moyen de pièces vissables,
sachant notamment qu'une vis respective de liaison est guidée pour traverser un évidement respectif d'une partie de l'articulation, et est vissée dans un perçage taraudé de l'autre partie considérée de ladite articulation, auquel cas les tenons (22) sont prévus pour transmettre des forces par complémentarité de formes, et/ou la tête respective de la vis de la partie respective de l'articulation exerce une pression contre l'autre partie considérée de ladite articulation.

5. Entraînement linéaire selon au moins l'une des revendications précédentes,
**caractérisé par le fait que**
la région, couverte par le bouclier de roulement (1) dans la direction axiale de la broche, est au moins en chevauchement avec la région couverte, dans ladite direction axiale de ladite broche, par l'articulation à la Cardan et/ou par les premières et/ou secondes zones protubérantes.

6. Entraînement linéaire selon au moins l'une des revendications précédentes,
**caractérisé par le fait que**
la région couverte par le palier (2) logé dans le bouclier de roulement (1), dans la direction axiale de la broche, est au moins en chevauchement avec la région couverte, dans ladite direction axiale de ladite broche, par l'articulation à la Cardan, par les deux parties de ladite articulation à la Cardan, et/ou par les premières et/ou secondes zones protubérantes.

7. Entraînement linéaire selon la revendication 4,
**caractérisé par le fait que**
les premières et/ou secondes zones protubérantes sont de réalisation cylindrique ;
et/ou **par le fait que** l'évidement, situé au niveau de la partie considérée de l'articulation, est de réalisation cylindrique en vue du rattachement, par ajustement avec jeu, à la première zone protubérante respective.

8. Entraînement linéaire selon la revendication 4 ou 7,
**caractérisé par le fait que**
chaque partie de l'articulation est pourvue d'un corps de base configuré en L, la seconde zone protubérante étant située sur une première branche du L, et l'évidement étant situé au niveau de l'autre branche.

9. Entraînement linéaire selon au moins l'une des revendications précédentes,
**caractérisé par le fait que**
les deux parties (16, 21) de l'articulation à la Cardan présentent des réalisations de même type.

10. Entraînement linéaire selon au moins l'une des revendications précédentes,
**caractérisé par le fait que**
l'écrou (20) de broche est monté à rotation dans un bouclier de roulement (1),
la broche (17) étant guidée pour traverser ledit écrou (20), et/ou ladite broche (17) faisant saillie de part et d'autre au-delà dudit bouclier de roulement (1),
sachant qu'un premier soufflet (5) entoure au moins partiellement une première région de la broche (17) et qu'un second soufflet (12) entoure, au moins partiellement, une seconde région de ladite broche (17),
ladite première région et ladite seconde région étant notamment situées à distance l'une de l'autre,
sachant, en particulier, qu'au moins ledit bouclier de roulement (1) occupe un emplacement intercalaire,
lequel bouclier de roulement (1) est doté d'un évidement ininterrompu, en vue d'équilibrer la pression de l'air entre l'espace interstitiel ceinturé par ledit premier soufflet (5) et l'espace interstitiel ceinturé par ledit second soufflet (12).

11. Entraînement linéaire selon la revendication 10,
**caractérisé par le fait que**
le bouclier de roulement (1) est interposé entre les premier et second soufflets (5, 12), c'est-à-dire, en particulier, que le premier soufflet (5) est situé à distance du second soufflet (12),
notamment au moins par l'entremise dudit bouclier de roulement (1).

12. Entraînement linéaire selon au moins l'une des revendications **10** à 11 précédentes,
**caractérisé par le fait que**
le premier soufflet (5) est relié à une partie de recouvrement (18) reliée, de manière libérable, à une partie (9) formant couvercle d'une transmission par courroie,
laquelle partie (9), formant couvercle, est reliée à une partie (6) formant carter de ladite transmission par courroie et reliée au bouclier de roulement (1), notamment du côté dudit bouclier de roulement qui pointe à l'opposé du second soufflet (12),
lequel bouclier de roulement (1) est relié à une partie (3) formant couvercle, ou est réalisé d'un seul tenant avec cette dernière, en particulier sur son côté pointant à l'opposé dudit premier soufflet (5),
ledit second soufflet (12) étant relié à ladite partie (3) formant couvercle.

13. Entraînement linéaire selon la revendication 12,
**caractérisé par le fait que**
la partie de recouvrement (18) est munie d'un évidement ininterrompu qui provoque un passage de l'air entre l'espace interstitiel ceinturé par le premier soufflet (5) et l'espace interstitiel ceinturé par la transmission par courroie, notamment par la partie (6) formant carter de ladite transmission par courroie et par la partie (9) formant couvercle, ainsi que par ladite partie de recouvrement (18) ;
et/ou **par le fait que**
la partie (3) formant couvercle, notamment reliée au second soufflet (12), est pourvue d'un évidement ininterrompu qui provoque un passage de l'air entre l'espace interstitiel ceinturé par ledit second soufflet (12) et l'évidement traversant en continu le bouclier de roulement (1) ;
et/ou **par le fait que**
l'évidement, traversant en continu le bouclier de roulement (1), est situé à distance du palier (2)
et présente, en particulier, un espacement radial supérieur à celui dudit palier (2), notamment par rapport à l'axe de la broche ;
et/ou **par le fait que**
ledit évidement traversant en continu ledit bouclier de roulement (1) débouche, d'une part, dans l'évidement traversant en continu la partie (3) formant couvercle et, d'autre part, dans l'espace interstitiel ceinturé par la transmission par courroie ;
et/ou **par le fait**
**qu'**une bague d'étanchement d'arbre, assurant l'étanchéité en direction de l'écrou (20) de broche, est logée dans ledit bouclier de roulement (1) ou dans ladite partie (3) formant couvercle,
sachant notamment que l'étanchéité de l'espace interstitiel ceinturé par le second soufflet (12) est instaurée, au moyen de ladite bague d'étanchement d'arbre, vis-à-vis de la région de l'espace couverte par le palier (2).

14. Entraînement linéaire selon au moins l'une des revendications précédentes,
**caractérisé par le fait que**
l'articulation à la Cardan, affectée à la liaison avec une partie du dispositif à entraîner, est implantée au niveau d'une zone d'extrémité de la broche (17),
les axes de rotation de cette articulation étant notamment orientés, à chaque fois, perpendiculairement à la direction axiale de ladite broche (17), sachant, en particulier, que lesdits axes de rotation sont mutuellement espacés.
